# EUROPEAN PATENT APPLICATION

(11) **EP 3 951 909 A1**
(43) Date of publication of application: **09.02.2022**
(21) Application number: 19923079.8
(22) Date of filing: 26.12.2019
(51) Int. Cl.: H01M 2/10

(54) **POWER SUPPLY DEVICE, ELECTRIC VEHICLE AND POWER STORAGE DEVICE INCLUDING POWER SUPPLY DEVICE, FASTENING MEMBER FOR POWER SUPPLY DEVICE, METHOD OF MANUFACTURING FASTENING MEMBER FOR POWER SUPPLY DEVICE, AND METHOD OF MANUFACTURING POWER SUPPLY DEVICE**

(30) Priority: 29.03.2019 JP 2019066831
(71) Applicant: SANYO Electric Co., Ltd., Daito-shi Osaka 574-8534 (JP)
(72) Inventor: YAMASHIRO, Go, Chuo-ku, Osaka-shi, Osaka 540-6207 (JP); FUJINAGA, Koji, Chuo-ku, Osaka-shi, Osaka 540-6207 (JP); KOGAMI, Nao, Chuo-ku, Osaka-shi, Osaka 540-6207 (JP)
(74) Representative: Vigand, Philippe
(86) International application number: PCT/JP2019/051119
(87) International publication number: WO 2020/202681

(57) **Abstract**

A power supply device, which is provided to prevent deformation and breakage of a fastening member used to fasten a battery stack and provide increased strength of connection of the fastening member with an end plate, includes a battery stack including a plurality of secondary battery cells that are stacked, a pair of end plates to cover both end faces of the battery stack, and a plurality of fastening members (4) disposed at opposed side faces of the battery stack to fasten the end plates together. Fastening member (4) includes fastening body (6) extending in a direction of stacking of the secondary battery cells and locking block (5) fixed to an inner face of each of both ends in longer direction of the fastening body (6). The end plates each have a fitting part in an outer peripheral surface of the end plate to guide locking block (5) into the fitting part and a stopper abutting on locking block (5). Fastening body (6) and locking block (5) of fastening member (4) are fixed to each other through a joint interface between fastening body (6) and locking block (5). The joint interface includes local joint region (15) that is a part of a joint surface size and surface joint region (16) that is a whole of the joint surface size through which the locking block and the fastening body are joined together.

## Description

### TECHNICAL FIELD

The present invention relates to a power supply device that includes a battery stack in which a plurality of secondary battery cells are stacked, end plates disposed at both ends of the battery stack, and fastening members to connect the end plates together. The present invention also relates to an electrified vehicle and a power storage device each including such a power supply device, a fastening member for the power supply device, a method of manufacturing such a fastening member for the power supply device, and a method of manufacturing such a power supply device.

### BACKGROUND ART

A typical power supply device includes a battery stack made up of a plurality of prismatic battery cells, a pair of end plates disposed on both end faces of the battery stack, and a fastening member such as bind bars to connect the pair of the end plates together (refer to PTL 1). This power supply device is designed to assemble the battery stack made up of the plurality of the prismatic battery cells by binding the battery stack with the end plates and the bind bars.

### Citation List

### Patent Literature

PTL 1: Unexamined Japanese Patent Publication No. 2015-220117

### SUMMARY OF THE INVENTION

### Technical problem

The power supply device of PTL 1 described above assembles the battery stack made up of the plurality of prismatic battery cells through the bind bars and the end plates and thus blocks swelling of the plurality of prismatic battery cells making up the battery stack. In other words, since the power supply device blocks swelling of the prismatic battery cells through the bind bars and the end plates, great force is applied to the bind bars and the end plates.

Meanwhile, the change of prismatic battery cells in size caused by charging and discharging or degradation tends to increase if the energy density per volume or per weight increases. A load applied to the bind bars and the end plates arises from an amount of swelling of the prismatic battery cells. Hence, if prismatic battery cells that greatly change in size along with the amount of swelling are included in the configuration of the power supply device of PTL 1 described above, a heavy load is applied to the end plates and the bind bars when the prismatic battery cells expand. This creates a risk that high shearing stress may be exerted on parts where the bind bars and the end plates are joined, resulting in a rupture in the bind bars.

The present invention has been developed to offset the above disadvantage. An object of the present invention is to provide a technique that prevents deformation and breakage of a fastening member used to fasten a battery stack in which a plurality of secondary battery cells are stacked and that provides increased strength of connection of the fastening member with an end plate.

### Solution to problem

A power supply device according to an aspect of the present invention includes battery stack 10 including a plurality of secondary battery cells 1 that are stacked. Each of the secondary battery cells includes exterior can 1a that is prismatic in shape. The power supply device includes a pair of end plates 3 to cover both end faces of battery stack 10 in a direction of stacking of battery stack 10 and a plurality of fastening members 4 disposed at opposed side faces of battery stack 10 to fasten end plates 3 to each other. Each of the plurality of fastening members 4 includes fastening body 6 that is in a shape of a flat sheet and that extends in the direction of stacking of secondary battery cells 1 and locking block 5 joined to an inner face of each of both ends in longer direction of fastening body 6. Each end plate 3 includes fitting part 3a in an outer peripheral surface of the end plate to guide locking block 5 into fitting part 3a and stopper 3b abutting on locking block 5. Stopper 3b is formed on fitting part 3a close to battery stack 10. Fastening body 6 and locking block 5 of each fastening member 4 are fixed to each other through a joint interface between fastening body 6 and locking block 5. The joint interface includes local joint region 15 that is a part of a joint surface size through which locking block 5 and fastening body 6 are joined to each other and surface joint region 16 that is a whole of the joint surface size through which locking block 5 and fastening body 6 are joined to each other.

A power supply device according to an aspect of the present invention includes battery stack 10 including a plurality of secondary battery cells 1 that are stacked. Each of the secondary battery cells includes exterior can 1a that is prismatic in shape. The power supply device includes a pair of end plates 3 to cover both end faces of battery stack 10 in a direction of stacking of battery stack 10 and a plurality of fastening members 4 disposed at opposed side faces of battery stack 10 to fasten end plates 3 to each other. Each of the plurality of fastening members 4 includes fastening body 6 that is in a shape of a flat sheet and that extends in the direction of stacking of secondary battery cells 1 and locking block 5 joined to an inner face of each of both ends in longer direction of fastening body 6. Each end plate 3 includes fitting part 3a in an outer peripheral surface of the end plate to guide locking block 5 into the fitting part and stopper 3b abutting on locking block 5. Stopper 3b is formed on fitting part 3a close to battery stack 10. Fastening body 6 and locking block 5 of each fastening member 4 are fixed to each other through a joint interface between fastening body 6 and locking block 5. The joint interface includes local joint region 15 that is a part of a joint surface size through which locking block 5 and fastening body 6 are joined to each other by spot welding and surface joint region 16 that is a whole of the joint surface size through which locking block 5 and fastening body 6 are joined to each other with adhesive 17.

An electrified vehicle according to an aspect of the present invention includes power supply device 100 described above, traction motor 93 that receives electric power from power supply device 100, vehicle body 91 that incorporates power supply device 100 and motor 93, and wheel 97 that is driven by motor 93 to let vehicle body 91 travel.

A power storage device according to an aspect of the present invention includes power supply device 100 described above and power supply controller 88 to control charging and discharging of power supply device 100. Power supply controller 88 enables charging of secondary battery cells 1 with electric power supplied from an outside and controls secondary battery cells 1 to charge.

A fastening member for a power supply device, according to an aspect of the present invention, is a fastening member for a power supply device that is configured to fasten a pair of end plates 3 to each other in which the end plates cover both end faces of battery stack 10 including a plurality of secondary battery cells 1 that are stacked. Each of the secondary battery cells includes exterior can 1a that is prismatic in shape. The fastening member includes fastening body 6 that is in a shape of a flat sheet and that extends in a direction of stacking of secondary battery cells 1 and locking block 5 joined to an inner face of each of both ends in longer direction of fastening body 6. Fastening body 6 and locking block 5 are fixed to each other through a joint interface between fastening body 6 and locking block 5. The joint interface includes local joint region 15 that is a part of a joint surface size through which locking block 5 and fastening body 6 are joined to each other and surface joint region 16 that is a whole of the joint surface size through which locking block 5 and fastening body 6 are joined to each other.

A method of manufacturing a fastening member for a power supply device, according to an aspect of the present invention, is a method of manufacturing a fastening member for a power supply device that is configured to fasten a pair of end plates 3 to each other in which the end plates cover both end faces of battery stack 10 including a plurality of secondary battery cells 1 that are stacked. Each of the secondary battery cells includes exterior can 1a that is prismatic in shape. The method includes the steps of preparing fastening body 6 that is in a shape of a flat sheet and that extends in a direction of stacking of secondary battery cells 1 and locking block 5 joined to an inner face of each of both ends in longer direction of fastening body 6, and joining fastening body 6 and locking block 5 to each other through a joint interface. The step of joining includes joining locking block 5 and fastening body 6 by surface together with adhesive 17 through a whole of a joint surface size and locally joining locking block 5 and fastening body 6 together by welding or mechanical joining through a part of the joint surface size.

A method of manufacturing a power supply device, according to an aspect of the present invention, is a method of manufacturing a power supply device that includes battery stack 10 including a plurality of secondary battery cells 1 that are stacked in which each of the secondary battery cells includes exterior can 1a that is prismatic in shape, a pair of end plates 3 to cover both end faces of battery stack 10 in a direction of stacking of battery stack 10, and a plurality of fastening members 4 disposed at opposed side faces of battery stack 10 to fasten end plates 3 to each other. The method includes the steps of: preparing fastening members 4 each including fastening body 6 that is in a shape of a flat sheet and that extends in the direction of stacking of secondary battery cells 1 and locking block 5 joined to an inner face of each of both ends in longer direction of fastening body 6; preparing end plates 3 each including fitting part 3a formed in an outer peripheral surface of the end plate to guide locking block 5 into the fitting part and stopper 3b abutting on locking block 5 in which stopper 3b is formed on fitting part 3a close to battery stack 10; covering both end faces of battery stack 10 with the pair of end plates 3; and fastening end plates 3 to each other with fastening members 4. The step of preparing each of fastening members 4 includes the steps of: joining the locking block and the fastening body by surface together with an adhesive through a whole of a joint surface size included in a joint interface between locking block 5 and fastening body 6; and locally joining the locking block and the fastening body together by welding or mechanical joining through a part of the joint surface size.

### Advantageous effect of invention

Regarding the power supply device and the fastening member for the power supply device according to the aspects of the present invention, the fastening member includes the fastening body extending in the direction of stacking of the secondary battery cells and the locking blocks fixed to both end portions of the fastening body. The locking blocks are locked by and fastened to the stoppers disposed on the end plates and are reliably fixed to the fastening body. This structure prevents deformation and breakage of the fastening member used to fasten the battery stack and provides increased strength of connection of the fastening member with the end plates.

Regarding the manufacturing methods according to the aspects of the present invention, the step of joining the locking block and the fastening body together includes joining them by surface together with the adhesive through a whole of the joint surface size and locally joining them together by welding or mechanical joining through a part of the joint surface size. This enables efficient mass production of the fastening member. In general, bonding strength provided by adhesive joining increases over time and thus adhesive joining requires time until the adhesive is cured. According to the methods described above, the locking block and the fastening body that are joined by surface together with the adhesive are locally joined together by welding or mechanical joining and thus this local joining allows the locking block and the fastening body to be held in close adhesion. As a result, even if the adhesive with which the locking block and the fastening body are joined by surface has not been cured yet, it is not necessary to wait for time, with the locking block and the fastening body being pressurized and held in close adhesion, until the adhesive is cured. The joint interface between the locking block and the fastening body locally joined together is held in close adhesion by the local joint region. This allows the adhesive to be reliably cured and assures connection strength while contributing to a substantial reduction in time taken for manufacturing. The locking block and the fastening body are joined by surface with the adhesive in the step before local joining. This enables local joining to be implemented with the locking block being temporarily fastened to a predetermined place on the fastening body. Thus, the methods also have a characteristic of being able to enhance processing accuracy while improving manufacturing efficiency.

### BRIEF DESCRIPTION OF DRAWINGS

FIG. 1 is a perspective view illustrating a power supply device according to a first exemplary embodiment.
FIG. 2 is an exploded perspective view of the power supply device of FIG. 1.
FIG. 3 is a horizontal cross-sectional view of the power supply device taken along line III-III in FIG. 1.
FIG. 4 is an enlarged cross-sectional view of a main part illustrating a structure of connection between an end plate and a fastening member illustrated in FIG. 3.
FIG. 5 is a perspective view illustrating a fastening member in FIG. 2.
FIG. 6 is a rear perspective view of the fastening member of FIG. 5.
FIG. 7 is an enlarged exploded perspective view of the fastening member of FIG. 6.
FIGS. 8 are schematic cross-sectional views illustrating a process for manufacturing a fastening member.
FIG. 9 is an enlarged exploded perspective view illustrating another example of a fastening member.
FIG. 10 is an enlarged exploded perspective view illustrating another example of a fastening member.
FIGS. 11 are schematic cross-sectional views illustrating a process for manufacturing the fastening member of FIG. 10.
FIG. 12 is a block diagram illustrating an example of a power supply device mounted in a hybrid vehicle that is driven by an engine and a motor.
FIG. 13 is a block diagram illustrating an example of a power supply device mounted in an electric vehicle that is driven only by a motor.
FIG. 14 is a block diagram illustrating an example of the technique applied to a power supply device for power storage.

### DESCRIPTION OF EMBODIMENTS

First, a subject that the inventors of the present invention focus on will be described. A power supply device in which a large number of battery cells are stacked is configured to connect end plates disposed on both ends of the battery stack made up of a plurality of the battery cells with a fastening member such as bind bars and thereby binds the plurality of the battery cells. The plurality of the battery cells are bound by the end plates and the bind bars, which have high stiffness, to avoid a malfunction or other faults caused by swelling, deformation, a relative displacement, or a vibration of the battery cells due to charging and discharging or degradation. In the above-described power supply device, an area of a surface of the battery cell on which the other battery cells are stacked is about 100 square centimeters, and blocking swelling of the battery cells can cause strong force of one ton or greater (e.g., several tons) to be applied to the end plates. As a result, extremely strong tensile force is applied to the bind bars, which are fixed to the end plates, through the end plates.

In a conventional power supply device in which both ends of a battery stack are fixed with end plates, a bent piece that is an end portion of a bind bar bent inward is fixed to an outer side of each of the end plates. In a structure describe above, the bent piece, the end portion of the bind bar being a metal sheet and being bent in processing, is fixed to an outer surface of each of the end plates. Hence, the bent piece is a metal sheet that has a thickness identical to that of the bind bar. The bind bar is made of a metal sheet with a tensile strength that withstands tensile force generated by swelling force of battery cells. The tensile strength of the metal sheet is substantially higher than bending strength of the metal sheet, and the bind bar is, for example, made of a metal sheet that has a thickness ranging approximately from 1 mm to 2 mm. The tensile force on the bind bar causes bending stress to be applied to the bent piece fixed to the outer surface of each of the end plates. Bending stress of a metal plate that the end plates are made of is substantially lower than tensile stress of the metal plate. The bending stress applied to the bent piece causes a bent portion of the bent piece to exceed yield strength and breaking strength and be deformed and be fractured. When no gap exists between the bent portion of the bent piece and any of the end plates, an inside face of the bent portion comes into contact with a corner of the end plate. This prevents assembly.

As described above, in the bind bar including the bent piece, which is the end portion bent in processing, an increase in tensile force applied to the bind bar causes further great stress to be concentrated locally on the inside of the bent portion of the bind bar and the corner of each of the end plates. This causes the bind bar and the end plates to be deformed and be damaged.

To address this problem, the present applicant has developed a power supply device of a structure in which a pair of end plates disposed on both ends of a battery stack in a direction of stacking of battery stack are fastened to each other by a fastening member. In the structure, the fastening member includes a principal fastening plane that is in a shape of a flat sheet and that extends in the direction of stacking of the battery stack and a locking block that is disposed on the principal fastening plane and that projects toward an outer peripheral surface of the end plate facing the locking block, and the locking block is locked into and fastened to a step part in each of the end plates. In the power supply device of this structure, the locking block is locked by and fastened to the end plate. Thus, this fastening member is not deformed by bending stress unlike the L-shaped portion of the conventional fastening member and can be fixed to the end plate by the locking block and the step part of the end plate without being deformed. In particular, this structure prevents positional displacement because the locking block is locked in the step part of the end plate. This prevents the fastening member and the end plates from being deformed by strong tensile force applied to the fastening member and inhibits the end plates from being shifted.

Meanwhile, in the fastening member including the principal fastening plane and the locking block, the principal fastening plane and the locking block need to be fixed to each other. The principal fastening plane made of a metal sheet and the locking block are joined together using spot welding. Unfortunately, since the principal fastening plane and the locking block are locally joined to each other by spot welding, great shearing stress is concentrated on local joints of these parts in response to swelling of the battery cells. Hence, there has been a demand for a fastening member that provides increased strength of connection between the locking block and the principal fastening plane and that withstands tensile force generated by swelling force of the battery cells.

A power supply device according to an aspect of the present invention may be specified by the following configuration.

The power supply device includes: a battery stack including a plurality of secondary battery cells that are stacked, each of the secondary battery cells including an exterior can that is prismatic in shape; a pair of end plates to cover both end faces of the battery stack in a direction of stacking of the battery stack; and a plurality of fastening members disposed at opposed side faces of the battery stack to fasten the end plates to each other. Each of the plurality of the fastening members includes: a fastening body in a shape of a flat sheet, the fastening body extending in the direction of stacking of the secondary battery cells; and a locking block joined to an inner face of each of both ends in longer direction of fastening body. Each of the end plates includes: a fitting part in an outer peripheral surface of the end plate to guide the locking block into the fitting part; and a stopper on a side of the fitting part close to the battery stack, the stopper abutting on the locking block. The fastening body and the locking block are fixed to each other through a joint interface between the fastening body and the locking block. The joint interface includes: a local joint region that is a part of a joint surface size through which the locking block and the fastening body are joined to each other; and a surface joint region that is a whole of the joint surface size through which the locking block and the fastening body are joined to each other.

In this specification, the term "surface joint region that is a whole of the joint surface size through which the locking block and the fastening body are joined to each other" does not necessarily mean a 100% region of the whole joint surface size of the joint interface between the locking block and the fastening body, but the term is used in a broad sense covering a state in which the whole joint surface size includes a zone through which the parts are not joined to each other to some degree. In other words, the "surface joint region that is a whole of the joint surface size through which the parts are joined to each other" means a substantially whole of the joint surface size, i.e., a 70% or larger region, preferably an 80% or larger region of the whole joint surface size.

According to the configuration described above, the fastening body and the locking block included in the fastening member are firmly joined to each other. This prevents deformation and breakage of the fastening member used to fasten the battery stack and provides increased strength of connection of the fastening member with the end plates. In particular, by a combination of different methods of joining applied to the joint interface between the locking block and the fastening body, the locking block and the fastening body are firmly joined together through the local joint region and are joined together by the wide area through the surface joint region. This provides increased resistance to shearing stress caused by factors such as swelling of the secondary battery cells and provides improved reliability in fastening of the battery stack.

In the power supply device according to another aspect of the present invention, the locking block and the fastening body are joined together with an adhesive through the surface joint region. According to the above configuration, the parts are joined to each other with the adhesive through the surface joint region, which is a whole of the joint surface size, in the joint interface between the locking block and the fastening body. This provides improved bonding strength between the locking block and the fastening body because the adhesive is simply and readily applied to the wide area.

In this specification, the term adhesive is used in a broad sense covering gluing agents. In other words, in this specification, adhesion means joining two individual surfaces to each other via a third medium and covers gluing in a broad sense.

In the power supply device according to another aspect of the present invention, the locking block and the fastening body are joined together by welding through the local joint region. In the power supply device according to another aspect of the present invention, the locking block and the fastening body are joined together by any of spot welding, laser welding, and metal inert gas (MIG) welding through the local joint region. The above configuration has the local joint region through which the parts are locally joined by welding. By combining the local joint region with the surface joint region for surface joining, the configuration provides increased strength of connection between the locking block and the fastening body. This provides increased resistance to shearing stress caused by factors such as swelling of the secondary battery cells and provides improved reliability in fastening of the battery stack.

In the power supply device according to another aspect of the present invention, the locking block and the fastening body are joined together by mechanical joining through the local joint region. In the power supply device according to another aspect of the present invention, the locking block and the fastening body are joined together by any of rivets, swaging, and bolt fastening through the local joint region. The above configuration has the local joint region through which the parts are locally joined by a way of mechanical joining such as rivets or swaging. By combining the local joint region with the surface joint region for surface joining, the configuration provides increased strength of connection between the locking block and the fastening body. This provides increased resistance to shearing stress caused by factors such as swelling of the secondary battery cells and provides improved reliability in fastening of the battery stack.

The power supply device according to another aspect of the present invention includes: a battery stack including a plurality of secondary battery cells that are stacked, each of the secondary battery cells including an exterior can that is prismatic in shape; a pair of end plates to cover both end faces of the battery stack in a direction of stacking of the battery stack; and a plurality of fastening members disposed at opposed side faces of the battery stack to fasten the end plates to each other. Each of the plurality of the fastening members includes: a fastening body in a shape of a flat sheet, the fastening body extending in the direction of stacking of the secondary battery cells; and a locking block joined to an inner face of each of both ends in longer direction of fastening body 6. Each of the end plates includes: a fitting part in an outer peripheral surface of the end plate to guide the locking block into the fitting part; and a stopper on a side of the fitting part close to the battery stack, the stopper abutting on the locking block. The fastening body and the locking block are fixed to each other through a joint interface between the fastening body and the locking block. The joint interface includes: a local joint region that is a part of a joint surface size through which the locking block and the fastening body are joined to each other by spot welding; and a surface joint region that is a whole of the joint surface size through which the locking block and the fastening body are joined to each other with an adhesive.

According to the above configuration, a combination of local joining by spot welding and surface joining by adhesive is applied to the joint interface between the locking block and the fastening body. This allows the locking block and the fastening body to be ideally joined to each other, provides increased resistance to shearing stress caused by factors such as swelling of the secondary battery cells, and provides improved reliability in fastening of the battery stack.

In the power supply device according to another aspect of the present invention, a plurality of the local joint regions are disposed at a plurality of places in a direction of extension of the locking block.

According to the above configuration, the plurality of the local joint regions are disposed at the plurality of places in the direction of extension of the locking block, and the locking block and the fastening member are locally joined to each other at the plurality of places. This configuration offers an advantage of providing improved bonding strength between the locking block and the principal fastening plane and improved reliability while avoiding concentration of shearing stress.

In the power supply device according to another aspect of the present invention, each of the end plates includes an internal screw hole opened in a bottom face of the fitting part, in each of the plurality of the fastening members, a through-hole is opened with the through-hole coinciding with the internal screw hole when the end plates are joined together, and the locking block is fixed to the fitting part of each of the end plates with a bolt being inserted through the through-hole and being screwed into the internal screw hole.

The above configuration including both the bolt and the stopper can reliably prevent the locking block from being displaced while reliably fixing the locking block to each of the end plates. This is because the bolt that presses and fixes the locking block to the bottom face of the fitting part reliably prevents displacement together with the stopper and shaft force of the bolt prevents displacement.

In the power supply device according to another aspect of the present invention, a plurality of the through-holes are disposed on a first straight line in a direction of extension of the locking block, and the local joint region is disposed on the first straight line and either between the through-holes or outside one of the through-holes.

In the power supply device according to another aspect of the present invention, a plurality of the through-holes are disposed on a first straight line in a direction of extension of the locking block, and the local joint region is disposed close to the battery stack relative to the first straight line.

The above configuration is designed to increase a distance from each of the through-holes opened in the fastening member to the local joint region and lower concentration of stress. At the same time, the configuration can ensure a widened area for the local joint region. Thus, this configuration provides a widened area for local joining and thereby enables increased connection strength. The local joint region is disposed adjacent to the stopper. This provides a satisfactory condition for the stopper to lock the locking block, enabling support with increased reliability.

In the power supply device according to another aspect of the present invention, the through-hole includes: a first through-hole opened in the fastening body; and a second through-hole opened in the locking block, the first through-hole has an internal diameter that a head of the bolt is allowed to pass through, and the second through-hole has an internal diameter that the head of the bolt is not allowed to pass through but a thread part of the bolt is allowed to pass through.

According to the above configuration, when the bolt is inserted through the through-hole formed in the fastening member and is screwed into the end plate, the head of the bolt is allowed to pass through the first through-hole formed in the fastening body. Thus, an amount of the head of the bolt projecting from a side face of the power supply device can be decreased to downsize an external shape of the power supply device. In particular, since the fastening body is joined to the locking block through the surface joint region in the power supply device described above, this structure allows the fastening body and the locking block to be reliably joined together and provides satisfactory resistance to shearing stress caused by fastening of parts while the first through-hole with a large internal diameter is opened in the fastening body.

Exemplary embodiments of the present invention will be described below with reference to the drawings. However, the exemplary embodiments described below are examples that allow a technical idea of the present invention to be embodied, and the present invention is not limited to the exemplary embodiments described below. Further, in the present description, components described in the scope of claims are not limited to the components of the exemplary embodiments. In particular, it is not intended to limit the scope of the present invention to sizes, materials, and shapes of components, relative arrangement of the components, and the like that are described in the exemplary embodiments, unless otherwise specified. The sizes, materials, and shapes of the components and the relative arrangement of the components are mere explanation examples. Note that the sizes, the positional relation, and the like of the components in the drawings may be exaggerated for clarifying the explanation. Furthermore, in the following description, the same names or the same reference marks denote the same components or components of the same type, and detailed description is appropriately omitted. Regarding the elements constituting the present invention, a plurality of elements may be formed of the same component, and one component may serve as a plurality of elements. In contrast, the function of one component may be shared by a plurality of components. Contents described in some examples or exemplary embodiments can be used, for example, in other examples or exemplary embodiments.

A power supply device according to an exemplary embodiment can be put to various uses including a power supply that is mounted in a hybrid vehicle, an electric vehicle, or another electrified vehicle to supply electric power to a drive motor, a power supply for storing electricity generated by natural energy such as photovoltaic power generation and wind power generation, and a power supply for storing late-night power. In particular, the power supply device can be used as a power supply suitable for high power and high current purposes. In an example given below, an exemplary embodiment in which the technique is applied to a power supply device for driving an electrified vehicle is described.

### [First exemplary embodiment]

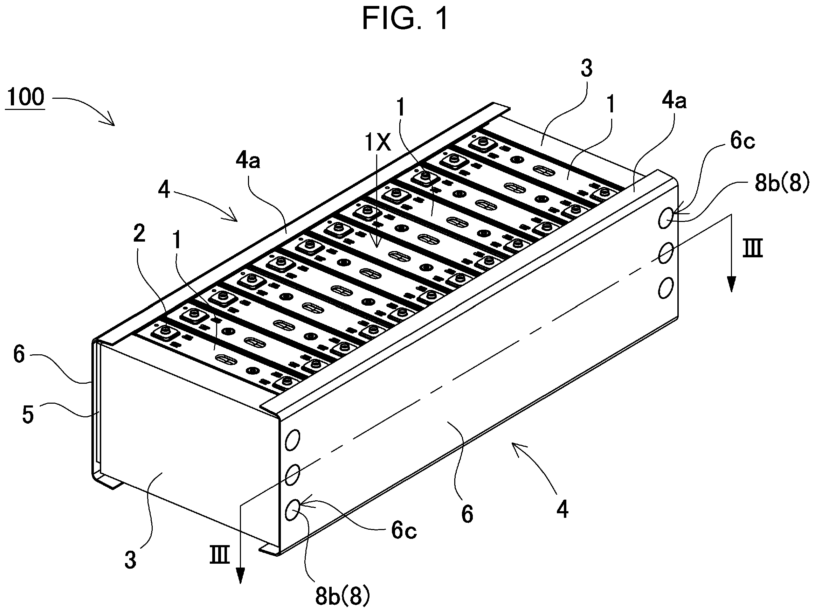

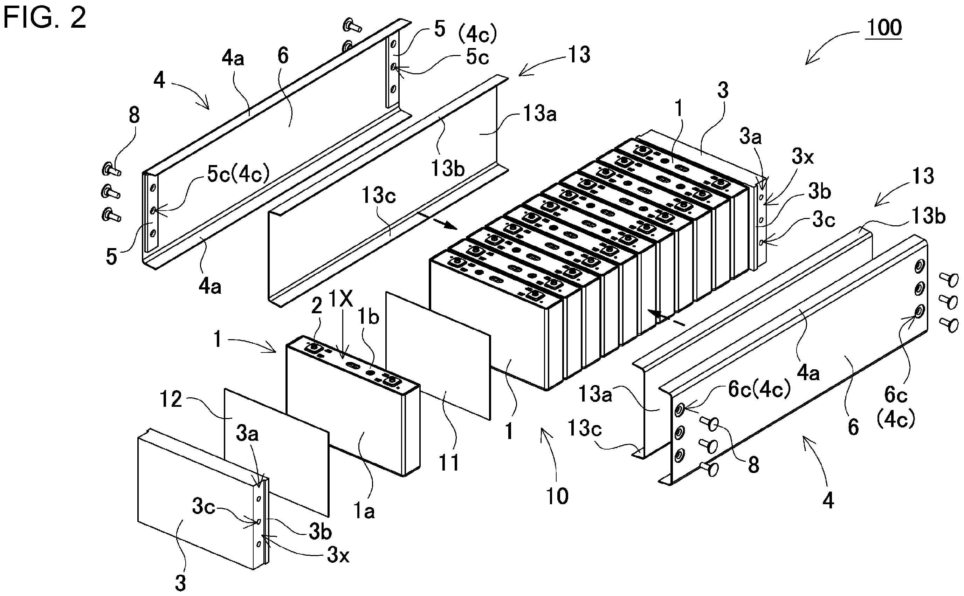

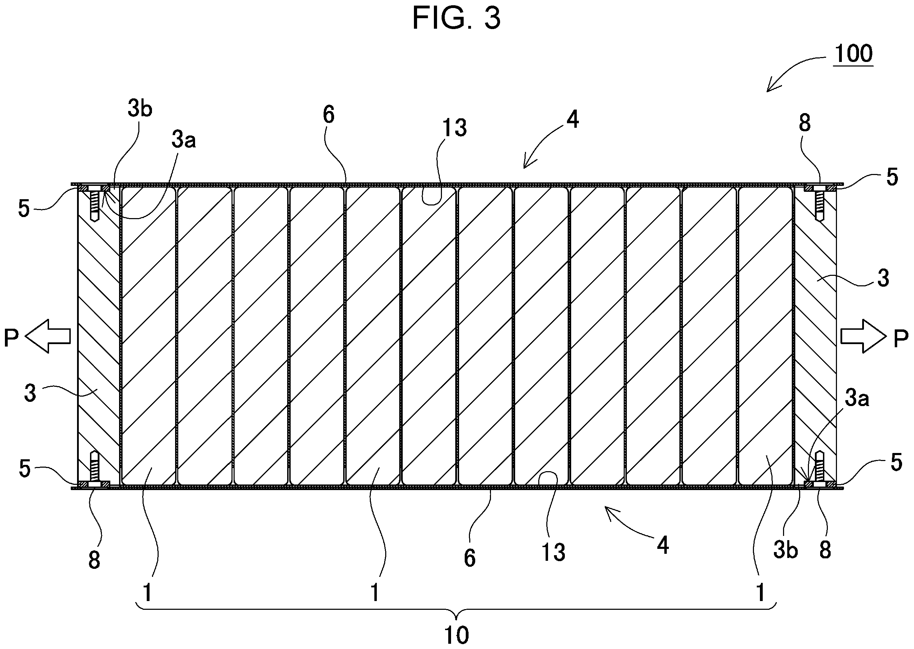

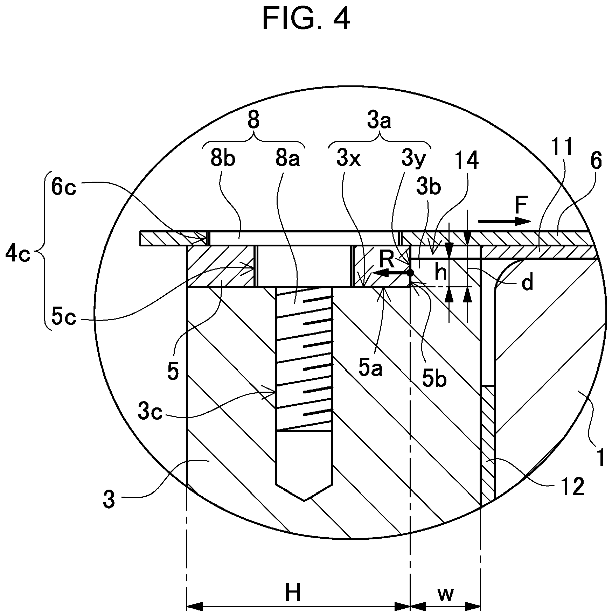

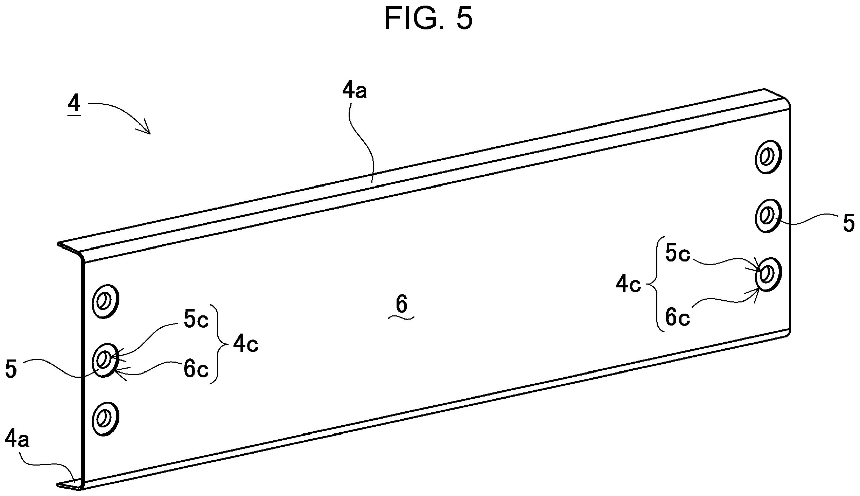

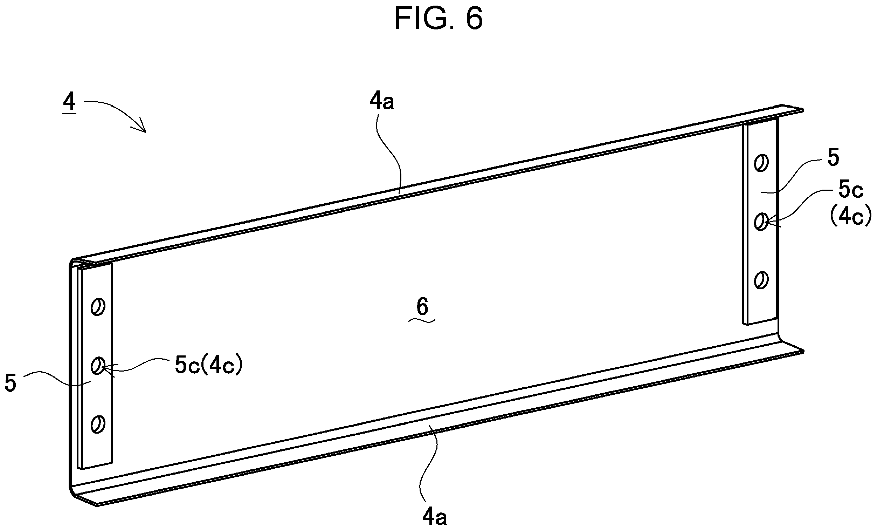

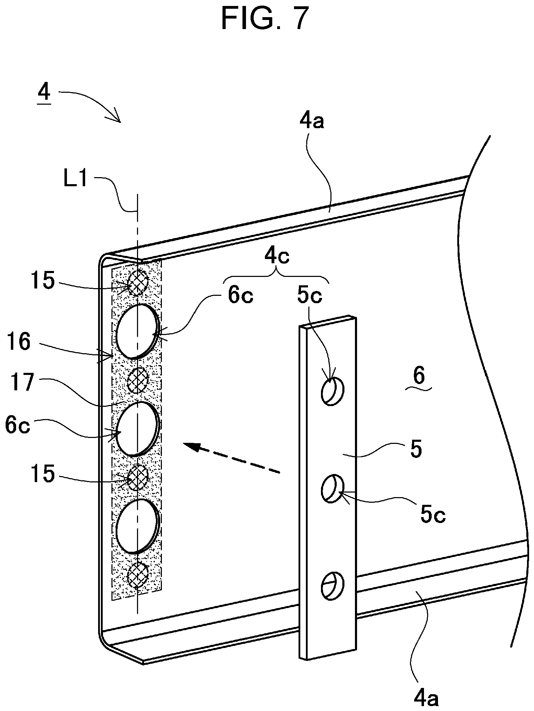

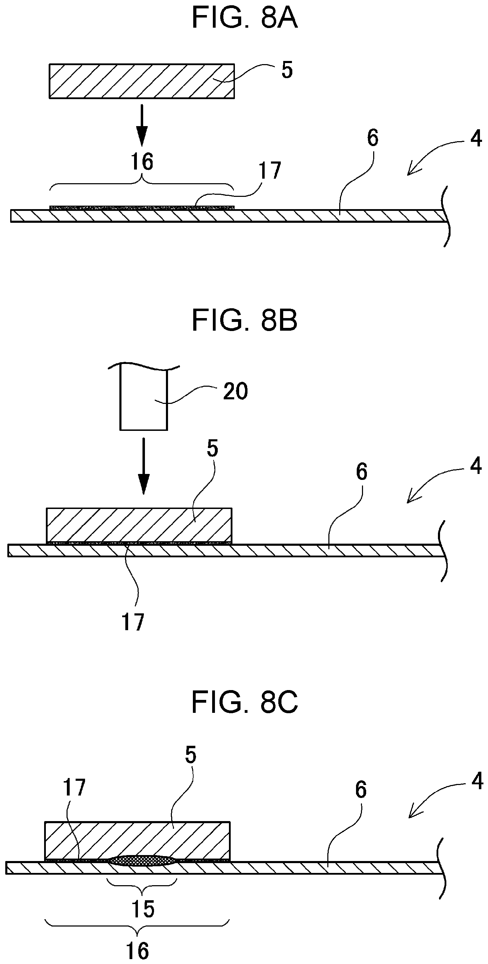

FIG. 1 and FIG. 2 are a perspective view and an exploded perspective view, respectively, of power supply device 100 according to a first exemplary embodiment of the present invention. FIG. 3 is a horizontal cross-sectional view of power supply device 100 taken along line III-III in FIG. 1. FIG. 4 is an enlarged view of a main part in FIG. 3. FIG. 5 is a perspective view illustrating fastening member 4 in FIG. 2. FIG. 6 is a rear perspective view of fastening member 4 of FIG. 5. FIG. 7 is an enlarged exploded perspective view of the fastening member illustrated in FIG. 6. FIGS. 8 are schematic views illustrating a process for manufacturing fastening member 4. Power supply device 100 shown in these figures includes battery stack 10 including a plurality of secondary battery cells 1 that are stacked, a pair of end plates 3 to cover both end faces of battery stack 10 in a stacking direction of battery stack 10, and a plurality of fastening members 4 to fasten end plates 3 together.

Battery stack 10 includes the plurality of secondary battery cells 1 that each have positive and negative electrode terminals 2 and bus bars (not shown) that are connected to electrode terminals 2 of the plurality of secondary battery cells 1 to connect the plurality of secondary battery cells 1 in parallel and series. The plurality of secondary battery cells 1 are connected in parallel or in series through the bus bars. Each secondary battery cell 1 is a dischargeable secondary battery. Power supply device 100 includes a plurality of secondary battery cells 1 connected in parallel to constitute a parallel-connected battery group and a plurality of the parallel-connected battery groups connected in series such that a large number of secondary battery cells 1 are connected in parallel and in series. In power supply device 100 illustrated in FIGS. 1 to 3, the plurality of secondary battery cells 1 are stacked to form battery stack 10. The pair of end plates 3 are disposed on both end faces of battery stack 10. End portions of fastening members 4 are fixed to end plates 3 in such a way as to pressurize and fix stacked secondary battery cells 1.

### (Secondary battery cell 1)

Secondary battery cell 1 is a prismatic battery. A principal surface or a wider surface of the prismatic battery is a quadrilateral in external shape. A thickness of the prismatic battery is smaller than a width of the prismatic battery. Secondary battery cell 1 is a dischargeable secondary battery and a lithium ion secondary battery. However, in the present invention, the secondary battery cells are not limited to prismatic batteries and are not limited to lithium ion secondary batteries. The secondary battery cells may be any rechargeable batteries, such as non-aqueous electrolyte secondary batteries or nickel hydride secondary batteries, other than lithium ion secondary batteries.

As illustrated in FIG. 2, secondary battery cell 1 houses an electrode assembly of laminated positive- and negative-electrode plates in exterior can 1a. The secondary battery cell is filled with an electrolyte and is made airtight. Exterior can 1a has a quadrilateral tubular shape and is closed at a bottom thereof. An upper opened face of the exterior can is hermetically sealed with sealing plate 1b made of a metal sheet. Exterior can 1a is made of a sheet of metal, such as aluminum or an aluminum alloy, by deep drawing. Sealing plate 1b is made of a sheet of metal, such as aluminum or an aluminum alloy, in the same way as exterior can 1a. Sealing plate 1b is inserted into the opened face of exterior can 1a, and a boundary between an outer periphery of sealing plate 1b and an inner periphery of exterior can 1a is irradiated with laser light to hermetically fix sealing plate 1b to exterior can 1a by laser welding.

### (Electrode terminal 2)

In secondary battery cell 1, a top panel of sealing plate 1b has terminal face 1X, and positive and negative electrode terminals 2 are fixed to both end portions of terminal face 1X. A projection of electrode terminal 2 is cylindrical. However, the projection is not necessarily required to be cylindrical but may be a polygonal or elliptic cylinder in shape.

Positive and negative electrode terminals 2 fixed to sealing plate 1b of secondary battery cell 1 are positioned such that the positive and negative electrodes are symmetrical. This allows secondary battery cells 1 adjacent to each other to be connected in series on condition that the positive and negative electrodes of stacked secondary battery cells 1 are arranged alternately and the positive and negative electrodes of electrode terminals 2 that are adjacent to and close to each other are connected by a bus bar.

### (Battery stack 10)

The plurality of secondary battery cells 1 are stacked to constitute battery stack 10 such that a thickness direction of each of secondary battery cells 1 aligns with a stacking direction. In battery stack 10, the plurality of secondary battery cells 1 are stacked such that terminal faces 1X provided with positive and negative electrode terminals 2, or sealing plates 1b in FIG. 2, are flush with one another.

In battery stack 10, insulating spacer 11 may be interposed between stacked secondary battery cells 1 adjacent to each other. Insulating spacer 11 is made of an insulating material such as a resin and has a thin plate shape or a sheet shape. Insulating spacer 11 has the shape of a plate that is substantially equal in size to a surface of secondary battery cell 1 facing the insulating spacer. Such insulating spacer 11 can be stacked between secondary battery cells 1 adjacent to each other to insulate adjacent secondary battery cells 1 from each other. The spacer disposed between adjacent secondary battery cells 1 may be a spacer that is shaped such that a flow path for a cooling gas is formed between secondary battery cell 1 and the spacer. A surface of secondary battery cell 1 may be coated with an insulating material. A shrink tube made of polyethylene terephthalate (PET) resin, for example, may be thermally welded on a surface of the exterior can, excluding electrode portions, of the secondary battery cell. In this case, the insulating spacer may be omitted. In a power supply device in which a plurality of secondary battery cells have multi-parallel serial connection, an insulating spacer may be omitted between the secondary battery cells connected in parallel to each other because of no difference in voltage between adjacent exterior cans of such secondary battery cells while an insulating spacer is interposed between the secondary battery cells connected in series to each other to insulate them from each other.

In power supply device 100 illustrated in FIG. 2, end plates 3 are disposed on both end faces of battery stack 10. End face spacer 12 may be interposed between each end plate 3 and battery stack 10 to insulate them from each other. End face spacer 12 may also be made of an insulating material such as a resin and have a thin plate shape or a sheet shape.

In battery stack 10, a metallic bus bar is connected to any of positive and negative electrode terminals 2 of adjacent secondary battery cells 1 such that the plurality of secondary battery cells 1 are connected in parallel and series via the bus bars. In battery stack 10, a plurality of secondary battery cells 1 connected in parallel to each other to constitute a parallel-connected battery group are stacked such that positive and negative electrode terminals 2 disposed on both end portions of respective terminal faces 1X are oriented so as to face a common horizontal direction, whereas a plurality of secondary battery cells 1 connected in series to each other to constitute a parallel-connected battery group are stacked such that positive and negative electrode terminals 2 disposed on both end portions of respective terminal faces 1X are oriented so as to face opposite horizontal directions. However, the present invention does not limit a number and a coupling state of the secondary battery cells constituting the battery stack. The exemplary embodiment as well as other exemplary embodiments described later may vary in number and coupling state of the secondary battery cells constituting the battery stack.

Power supply device 100 according to the exemplary embodiment includes battery stack 10 including the plurality of secondary battery cells 1 stacked on one another. In the battery stack, electrode terminals 2 of secondary battery cells 1 adjacent to each other are connected via the bus bar to connect the plurality of secondary battery cells 1 in parallel and series. A bus bar holder may be disposed between battery stack 10 and the bus bars. Use of the bus bar holder allows a plurality of the bus bars to be insulated from each other and allows the plurality of the bus bars to be disposed at fixed places on a top face of the battery stack while the terminal faces of the secondary battery cells are insulated from the bus bars.

### (Bus bar)

The bus bar is made by cutting and processing a metal sheet to have a predetermined shape. The metal sheet that the bus bar is made of is a sheet of lightweight metal that has low electrical resistance, such as a sheet of aluminum, a sheet of copper, or a sheet of an alloy of these metals. However, the metal sheet for the bus bar may be a sheet of any of other lightweight metals that have low electrical resistance or a sheet of an alloy of these metals.

### (End plate 3)

As shown in FIGS. 1 to 3, end plates 3 are disposed at both ends of battery stack 10 and are fastened with each other through a pair of right and left fastening members 4 that are disposed along both side faces of battery stack 10. An external shape of end plate 3 is substantially equal to or slightly larger than an external shape of secondary battery cell 1, and end plates 3 are quadrilateral plates used to block swelling of battery stack 10 with fastening members 4 that are fixed to outer peripheral surfaces on both sides of the end plates. End plate 3 is entirely made of metal such as aluminum, an aluminum alloy, stainless steel, or iron. However, the end plate may have a structure of plastic and metal sheet layers or may be a plate entirely molded from a fiber-reinforced plastic containing buried reinforced fibers, although no illustration is given.

End plates 3 are put into surface contact with and adhere to surfaces of secondary battery cells 1 through end face spacers 12 to hold secondary battery cells 1. A process for assembling power supply device 100 involves disposing end plates 3 on both ends of battery stack 10, pressurizing end plates 3 on both ends with a press (not illustrated) to hold secondary battery cells 1 pressurized in the stacking direction, and fixing fastening members 4 to end plates 3 while keeping the secondary battery cells pressurized. After end plates 3 are fixed to fastening members 4, pressurization by the press is canceled.

End plates 3 fixed to fastening members 4 receive swelling force P of battery stack 10 and hold secondary battery cells 1. End plate 3, as illustrated in the enlarged cross-sectional view of FIG. 4, has a fitting part 3a in the outer peripheral surface on either side of the end plate to guide locking block 5 disposed on fastening member 4 and be reliably connected to locking block 5 disposed on fastening member 4, which is fixed to the end plate. Further, end plate 3 has stopper 3b on a side of fitting part 3a close to battery stack 10. The stopper abuts on locking block 5. In other words, both side faces of end plate 3 are each provided with stopper 3b projecting from an end adjacent to battery stack 10 toward fastening member 4 and fitting part 3a that forms a step. As illustrated in FIGS. 2 to 4, end plate 3 has a plurality of internal screw holes 3c in bottom face 3x of each fitting part 3a.

End plates 3 receive swelling force P, which is generated by secondary battery cells 1 propelled to swell and expand in the battery stacking direction, from battery stack 10. In this state, locking blocks 5 of fastening members 4 connected to end plates 3 receive, at parts of contact with stoppers 3b, pressing force R pressing outward in the battery stacking direction. This causes strong tensile force F to be applied to fastening members 4 in reaction to pressing force R applied to locking blocks 5. Since stoppers 3b and locking blocks 5 are put into contact with each other, end plates 3 inhibit locking blocks 5 from being shifted by tensile force F of fastening members 4 and are kept fastened while withstanding swelling force P of secondary battery cells 1. A width of each stopper 3b is such that the stopper is not deformed by tensile force F of fastening member 4 applied to a part of contact with locking block 5. Width (w) of stopper 3b is set to an optimum value in consideration of tensile force F of fastening member 4. When end plate 3 is entirely made of aluminum, the width is, for example, 3 mm or greater, preferably 4 mm or greater, more preferably 5 mm or greater, and optimally 8 mm or greater. Maximum shearing force that the material withstands is substantially higher than maximum bending force. Width (w) of stopper 3b is set to a value in the range described above to ensure that shearing stress of stopper 3b supports tensile force F of fastening member 4. This prevents stopper 3b from being deformed.

In end plate 3 illustrated in FIG. 4, height (h) of stopper 3b is made lower than projection amount (d) of the locking block to make gap 14 between a distal end face of stopper 3b and an inner surface of fastening member 4. This structure enables distal end face 5a of locking block 5 to adhere to the side face of end plate 3 that constitutes bottom face 3x of each fitting part 3a and enables locking face 5b of locking block 5 to reliably abut on support face 3y of stopper 3b. However, in end plate 3, height (h) of the stopper may be made equal to projection amount (d) of the locking block, although no illustration is given. In this case, the distal end face of the stopper can be disposed close to the inner surface of the fastening member. As described above, height (h) of stopper 3b is specified in consideration of projection amount (d) of locking block 5 and a distance of the gap made between the distal end face of stopper 3b and the inner surface of fastening member 4.

### (Fastening member 4)

Both ends of each fastening member 4 are fixed to end plates 3 disposed on both end faces of battery stack 10. The pair of end plates 3 are fixed by the plurality of fastening members 4 and thereby battery stack 10 is fastened in the stacking direction. As illustrated in FIGS. 4 to 7, fastening member 4 includes flat fastening body 6 extending in the stacking direction of battery stack 10 and locking blocks 5 fixed to both ends in longer direction of fastening body 6. Fastening bodies 6 are disposed opposite to each other at both side faces of battery stack 10. Locking blocks 5 are guided into and are fixed to fitting parts 3a formed in the outer peripheral surfaces of end plates 3.

### (Fastening body 6)

Fastening body 6 is a metal sheet having a predetermined width along the side face of battery stack 10, as well as a predetermined thickness. Fastening body 6 is made of a metal sheet that withstands strong tensile force F. Fastening body 6 is made thin in thickness ranging, for example, from 1 mm to 2 mm and thereby provides strength to withstand tensile force F applied to fastening member 4 as well as stretchability. Of fastening member 4 in FIG. 2, fastening body 6 disposed at either side of battery stack 10 is a metal sheet that has a vertical width covering the side face of battery stack 10. Metal sheet-made fastening body 6 is bent by press forming or other processing and is formed into a predetermined shape. Upper and lower edges of fastening body 6 illustrated in the figure are bent in processing to form bent pieces 4a. Upper and lower bent pieces 4a at the right and left side faces of battery stack 10 are shaped so as to cover top and bottom faces of battery stack 10 from corners.

### (Locking block 5)

As illustrated in FIGS. 5 to 7, locking block 5 has the shape of a plate or a prism having a predetermined thickness and is made of metal. Locking blocks 5 illustrated in the figure each have the shape of a plate thicker than fastening body 6 and are joined to and fixed to an inner face of both ends in longer direction of fastening body 6. Locking block 5 fixed to fastening body 6 is formed so as to project from the inside face of fastening body 6 toward the outer peripheral surface of end plate 3. A pair of locking blocks 5 fixed to both end portions of fastening body 6 are disposed along outer sides of end plates 3 and each have a size and a shape such that the locking block is guided into fitting part 3a formed in the outer sides of end plate 3 and is locked by stopper 3b. When fastening members 4 are connected to end plates 3, locking blocks 5 are guided into fitting parts 3a and locked by stoppers 3b to dispose fastening members 4 at fixed places on both sides of battery stack 10. With locking blocks 5 guided into fitting parts 3a and locked by stoppers 3b of end plates 3, fastening members 4 provide increased resistance to shearing stress.

Thickness (d) of locking block 5 fixed to fastening body 6 is equal to an amount of the locking block projecting from the inside face of the fastening body. Hence, thickness (d) of locking block 5 is determined so as to be a projecting amount by which locking face 5b close to stopper 3b reliably abuts on and is supported by stopper 3b. Width (H) of locking block 5 in the battery stacking direction is set to a width, for example, 10 mm or greater, by which the locking block is not deformed by tensile force F applied to fastening body 6. When width (H) of locking block 5 is greater than approximately 10 mm, the locking block can support tensile force F applied to fastening body 6 by shearing force. Consequently, width (H) of locking block 5 is set to 10 mm or greater to enable the locking block to support tensile force F applied to fastening body 6 by such shearing force and provide satisfactory strength.

Fastening bodies 6 and locking blocks 5 are made of sheets or plates of metal such as iron and preferably be made of other metal such as steel sheets or plates or iron, an iron alloy, stainless steel, aluminum, or an aluminum alloy. Preferably, locking blocks 5 and fastening bodies 6 should be made of a metal of the same kind. This allows locking blocks 5 and each fastening body 6 to be readily welded together and provide increased connection strength.

However, fastening members 4 may be such that fastening bodies 6 and locking blocks 5 are made of metals of different kinds. In other words, fastening member 4 may be made up of locking blocks 5 and fastening body 6 that are made of metals of different kinds and are joined and connected together. In this case, for instance, the locking blocks are made of an iron-based metal to provide increased strength, and the fastening bodies are made of an aluminum-based metal to provide increased stretchability.

### (Through-hole 4c)

Fastening members 4 described above are fixed to the outer peripheral surfaces of end plates 3 by a plurality of bolts 8, as illustrated in the enlarged cross-sectional view of FIG. 4, with locking blocks 5 guided into fitting parts 3a and locked by stoppers 3b of end plates 3. Fastening member 4 illustrated in FIGS. 4 to 7 has through-holes 4c through which bolts 8 are inserted to fix locking blocks 5 to fitting parts 3a with bolts 8 when end plates 3 are fastened to each of the fastening members. Bolts 8 are used to fix locking blocks 5 to end plates 3 by passing through fastening members 4 and being screwed into end plates 3. Power supply device 100 of such a fixing structure provided with both bolts 8 and stoppers 3b can reliably prevent locking blocks 5 from being displaced while reliably fixing locking blocks 5 to end plates 3. This is because bolts 8 that press and fix locking blocks 5 to bottom faces 3x of fitting parts 3a reliably prevent displacement together with stoppers 3b and shaft force of bolts 8 prevents displacement.

Fastening members 4 are fixed to end plates 3 with thread part 8a of each bolt 8 inserted through through-hole 4c and screwed into internal screw hole 3c formed in end plates 3. In fastening members 4 illustrated in the figures, through-holes 4c are opened so as to coincide with internal screw hole 3c formed in end plates 3 when locking blocks 5 are completely guided into fitting parts 3a. In fastening member 4 in FIGS. 5 to 7, a plurality of through-holes 4c are formed and opened at predetermined intervals in a direction of extension of locking blocks 5 and a vertical direction in the figures. In response to this, the plurality of internal screw holes 3c in end plates 3 are formed along the side face of end plate 3.

In addition, through-hole 4c of fastening member 4 illustrated in FIGS. 4 to 7 includes first through-hole 6c opened in fastening body 6 and second through-hole 5c opened in locking block 5. In fastening member 4 illustrated in the figures, first and second through-holes 6c and 5c have concentric openings. First through-hole 6c has an internal diameter that head 8b of bolt 8 is allowed to pass through, whereas second through-hole 5c has an internal diameter that head 8b is not allowed to pass through but thread part 8a of bolt 8 is allowed to pass through. When fastening members 4 of this structure are fixed to end plates 3 with bolts 8 inserted through through-holes 4c, head 8b of each bolt 8 is allowed to pass through first through-hole 6c while thread part 8a of each bolt 8 is allowed to pass through first and second through-holes 6c and 5c and be screwed into internal screw hole 3c. Head 8b of bolt 8, illustrated in FIG. 4, is substantially equal in thickness to fastening body 6. When bolt 8 is screwed into end plate 3, a surface of head 8b of bolt 8 is substantially flush with a surface of fastening member 4. This structure is a structure in which head 8b of bolt 8 does not project from a side face of power supply device 100. This contributes to downsized external shape of power supply device 100.

However, the head of the bolt inserted through the through-hole may be greater in thickness than the fastening body such that the head partly projects from the surface of the fastening member. Even in this case, the amount of the head of the bolt projecting from the side face of the power supply device can be decreased to downsize the external shape of the power supply device. Both the first and the second through-holes of the through-hole of the fastening member may have an internal diameter that the thread part of the bolt is allowed to pass through but the head is not allowed to pass through. In this case, an opened area of the first through-hole can be made equal to an opened area of the second through-hole. This allows a surface joint region to be widened in a joint interface between the locking block and the fastening body, and hence increases adhesive strength.

In making fastening member 4 whose first through-holes 6c and second through-holes 5c differ in internal diameter, first through-holes 6c are made in fastening body 6 and second through-holes 5c are made in locking blocks 5 in a step before locking blocks 5 are joined to fastening body 6. Then, locking blocks 5 are joined at fixed places to fastening body 6 such that second through-holes 5c in locking blocks 5 are concentric with respective first through-holes 6c in fastening body 6.

In contrast to this, in making a fastening member whose first through-holes and second through-holes are identical in internal diameter, locking blocks can be joined at fixed places to a fastening body after making the first through-holes in the fastening body and the second through-holes in the locking blocks in a step before the locking blocks are joined to the fastening body. However, the first through-holes and the second through-holes may be simultaneously made after the locking blocks are joined at fixed places to the fastening body.

### (Joining step)

Locking blocks 5 are joined to and fixed to both end portions of the inside face of fastening body 6, with the locking blocks stacked on the inside face, to form fastening member 4 described above. Locking block 5 and fastening body 6 are fixed to each other through a joint interface between the locking block and the fastening body. The joint interface includes local joint region 15 that is a part of a joint surface size through which locking block 5 and fastening body 6 are joined to each other and surface joint region 16 that is substantially a whole of the joint surface size through which locking block 5 and fastening body 6 are joined to each other. Locking block 5 and fastening body 6 are joined together through each of local joint region 15 and surface joint region 16. Methods for joining the locking block to the fastening body are different between local joint region 15 and surface joint region 16. In other words, locking block 5 and fastening body 6 are joined to each other through local joint region 15 and surface joint region 16 using different methods of joining. This provides ideal connection strength. Through local joint region 15, locking block 5 and fastening body 6 are joined together by welding or mechanical joining. Through surface joint region 16, the locking block and the fastening body are bonded to each other with an adhesive and are thereby joined together. By combining local joint region 15 and surface joint region 16 through which locking block 5 and fastening body 6 are joined to each other, the fastening member takes advantage of characteristics of the different methods of joining and provides excellent connection strength.

### (Surface joining step)

Locking block 5 and fastening body 6 are joined to each other through the joint interface, which includes surface joint region 16 that is a substantially whole region of the joint surface size. Of surfaces of locking block 5 and fastening body 6 facing each other, a region where the locking block and the fastening body are put into surface contact with each other is the joint interface, and a substantially whole of the joint surface size is surface joint region 16. A substantially whole of a joint face of locking block 5 facing the inside face of fastening body 6 is surface joint region 16. As shown with a dashed line in FIG. 7, a region of the end portion of the inside face of fastening body 6 facing the joint face of locking block 5 is the joint interface, and a substantially whole of the joint surface size is surface joint region 16.

Locking block 5 and fastening body 6 are put into surface contact with each other with adhesive 17 through surface joint region 16. Adhesive 17 for joining through surface joint region 16 is an adhesive used to bond metals to each other and is preferably an epoxy adhesive. However, the adhesive may be another adhesive such as an acrylic adhesive, a rubber-base adhesive, an instantaneous adhesive, and an elastic adhesive. Locking block 5 and fastening body 6 may be put into surface contact with each other through surface joint region 16 using a gluing agent as a type of adhesive. Such a gluing agent is, for example, an acrylic gluing agent, a silicone gluing agent, or a rubber-base gluing agent. Adhesive 17 described above can be simply and readily applied to surface joint region 16 using a tool such as a brush, a roller, or a spray. The gluing agent may be a double-sided tape.

The surface joining step is executed as a step before a local joining step described later. The surface joining step is executed as a step after a step for forming through-holes 4c described above. In other words, as illustrated in FIG. 7, after second through-holes 5c are bored at predetermined places in locking block 5 and first through-holes 6c are bored at predetermined places in fastening body 6, adhesive 17 is, as illustrated in FIGS. 7 and 8A, applied to surface joint region 16, which a substantially whole surface of the joint interface and a region except through-holes 4c. In the step, adhesive 17 can be applied to the whole region including local joint region 15. However, adhesive 17 may be applied to the whole region except local joint region 15 without applying adhesive 17 to a zone amounting to local joint region 15. FIGS. 7 and 8A each illustrate an example in which adhesive 17 is applied only to surface joint region 16 on fastening body 6. This case is convenient for fastening member 4 whose first through-holes 6c are larger in opening than second through-holes 5c, because adhesive 17 is not applied to an area inside each first through-hole 6c. However, adhesive 17 may be applied only to surface joint region 16 on locking block 5 or may be applied to both locking block 5 and fastening body 6. Fastening body 6 and locking block 5 on which adhesive 17 is applied to any one of or both of surface joint regions 16 are stacked on each other and are joined together by surface.

### (Local joining step)

Locking block 5 and fastening body 6 joined to each other by surface through surface joint region 16 are locally joined together further through local joint region 15 that is a partial zone of the joint surface size of the joint interface. Locking block 5 and fastening body 6 are locally joined to each other through a plurality of local joint regions 15 that are disposed in the direction of extension of locking blocks 5. In a local joining step, locking block 5 and fastening body 6 are joined together by welding or mechanical joining. Preferably, spot welding should be adopted for the local joining through welding. However, the local joining through welding may be another way of welding such as laser welding or metal inert gas (MIG) welding. The mechanical joining may be a way of joining using, for example, any of rivets, swaging, and bolt fastening.

### (Spot welding)

FIG. 7 illustrates an example in which locking block 5 and fastening body 6 are locally joined together by spot welding. As illustrated in FIGS. 8, with locking block 5 and fastening body 6 stacked on each other at a predetermined location and joined together by surface, welding electrode 20 is pressed against a surface opposed to each local joint region 15 to weld the locking block and the fastening body together by spot welding. Preferably, as illustrated by cross-hatching in FIG. 7, the locking block and the fastening body should be locally joined together by being welded to each other by spot welding at a plurality of places that are evenly spaced in the direction of extension of locking blocks 5 and the vertical direction in the figure. In this way, local joint regions 15 where spot welding is conducted are arranged at equal intervals on the joint interface extending in a longer direction of locking block 5. This is designed to make joints of locking block 5 and fastening body 6 equal, curb concentration of shearing stress, and increase connection strength.

In locking block 5 and fastening body 6 illustrated in FIG. 7, the plurality of through-holes 4c are disposed on first straight line L1 in the direction of extension of locking blocks 5, and the plurality of local joint regions 15 are disposed on first straight line L1 and either between through-holes 4c or outside through-holes 4c. In this way, local joint regions 15 where spot welding is conducted are formed either between through-holes 4c opened in fastening member 4 or outside through-holes 4c. This structure compensates for decreased connection strength owing to no surface joint in areas of through-holes 4c and allows locking block 5 to be joined to fastening body 6 in a balanced way.

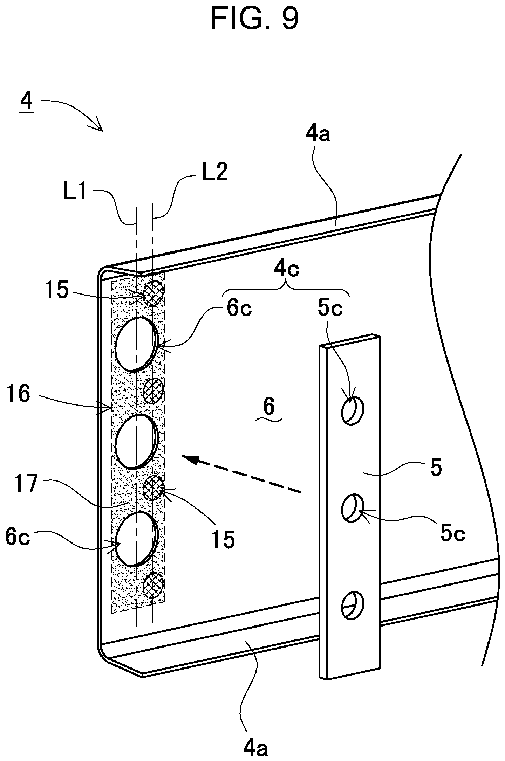

Further, as illustrated in FIG. 9, local joint regions 15 may be disposed so as to be displaced from first straight line L1, on which the plurality of through-holes 4c are disposed. This structure is designed to increase a distance from first through-hole 6c opened in fastening body 6 or second through-hole 5c opened in locking block 5 to local joint region 15 and lower concentration of stress. Local joint regions 15 are not positioned on first straight line L1 linking through-holes 4c together but are positioned on second straight line L2 displaced from the first straight line. This ensures a widened area for local joining. Thus, this structure provides a widened joint surface size where spot welding or other local joining is performed and thereby provides increased connection strength. Since through-holes 4c are circular, the displaced local joint regions allow efficient use of a delta region between the circular holes. This helps to ensure a wide area, resulting in a widened area for spot welding and increased welding bonding strength.

When this structure is employed, it is preferred that local joint region 15 be displaced toward battery stack 10 relative to through-holes 4c. In an example illustrated in FIG. 9, the plurality of through-holes 4c are disposed on first straight line L1 in the direction of extension of locking blocks 5, and the plurality of local joint regions 15 are displaced toward battery stack 10, i.e., toward stopper 3b, relative to first straight line L1. This structure, when locking block 5 is locked and supported by stopper 3b, allows stress caused by swelling of secondary battery cells 1 to be received in immediate vicinities of local joint regions 15. This contributes to decentralization of applied stress and improved stiffness of fastening member 4. When laser welding or MIG welding is used instead of spot welding, the locking block and the fastening body can be locally welded together at a plurality of places in the extension direction in a similar way to spot welding. Alternatively, the locking block and the fastening body may be welded together on a linear form in the direction of locking block extension.

Fastening member 4 described above is assembled in steps shown below.
(1) A metal sheet having a predetermined thickness is cut to a predetermined length and is bent into a predetermined shape to prepare fastening body 6. A metal plate having a predetermined thickness is cut into a predetermined shape to prepare each locking block 5.
(2) As illustrated in FIG. 7, a plurality of first through-holes 6c are made in both end portions of fastening body 6. The plurality of first through-holes 6c are disposed at predetermined intervals so as to coincide with internal screw holes 3c formed in end plates 3. A plurality of second through-holes 5c are made in locking blocks 5. The plurality of second through-holes 5c are opened at predetermined intervals such that the second through-holes are concentric with respective first through-holes 6c formed in fastening body 6.
(3) As illustrated in FIGS. 7 and 8A, adhesive 17 is applied to surface joint regions 16 that are both end portions of the inside face of fastening body 6 and that are regions (shown with the dashed line in FIG. 7) constituting the joint interfaces with respective locking blocks 5. Adhesive 17 may be applied to only regions except some zones amounting to local joint regions 15. Adhesive 17 may be applied to the joint face of each locking block 5.
(4) As illustrated in FIG. 8B, fastening body 6, on which adhesive is applied to each surface joint region 16, and locking blocks 5 are stacked on each other and are joined together by surface.
(5) As illustrated in FIG. 8B, fastening body 6 and locking blocks 5 connected to each other in layers by surface joining are locally joined together by spot welding. As illustrated by cross-hatching in FIGS. 7 and 9, locking blocks 5 and fastening body 6 are locally joined to each other through a plurality of local joint regions 15 by being spot welded together along the direction of extension of locking blocks 5.
(6) As illustrated in FIG. 8C, locking blocks 5 and fastening body 6 locally joined together by spot welding are held in close adhesion on the joint interfaces. In this state, adhesive 17 applied to surface joint regions 16 is cured over time.

### (Mechanical joining)

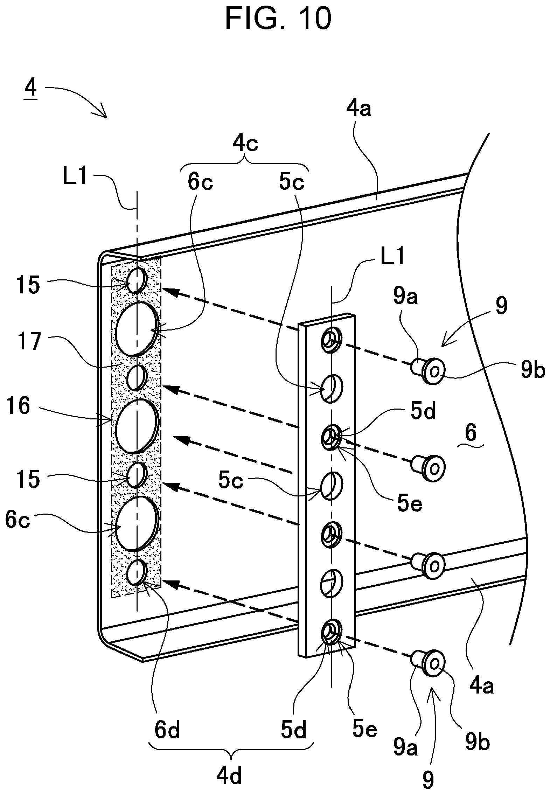

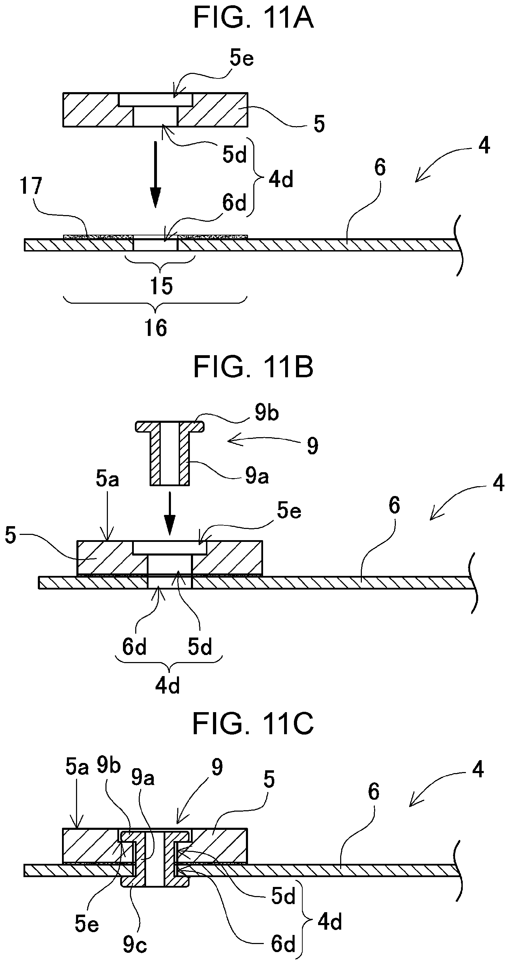

Locking block 5 and fastening body 6 can also be locally joined together by mechanical joining. As an example of mechanical joining, joining by rivets is illustrated in FIGS. 10 and 11. Fastening member 4 illustrated in these figures has through-holes 4d through which rivets 9 are inserted to connect locking block 5 to fastening body 6 by rivets 9. Through-hole 4d illustrated in the figures includes first through-hole 6d opened in fastening body 6 and second through-hole 5d opened in locking block 5. First and second through-holes 6c and 5c have concentric openings and each have an internal diameter that cylindrical part 9a of rivet 9 is allowed to pass through but flange 9b is not allowed to pass through. Further, in locking block 5 of the figures, step recess 5e is formed along a circumference of an opening edge of second through-hole 5c to prevent flange 9b of rivet 9 inserted into second through-hole 5c from projecting beyond distal end face 5a of locking block 5. The step recess has an internal diameter so as to house flange 9b.

To make fastening member 4 of this stricture, as illustrated in FIGS. 10 and 11, through-holes 4d are formed in locking blocks 5 and fastening body 6 in a step before the surface joining step, locking blocks 5 and fastening body 6 are joined by surface together with adhesive 17 in the surface joining step, and locking blocks 5 and fastening body 6 are locally joined together by rivets 9 in the local joining step. In the local joining step, cylindrical part 9a of each rivet 9 is inserted through second through-hole 5d and first through-hole 6d, a distal end of cylindrical part 9a is swagged to form swagged end 9c, and locking blocks 5 and fastening body 6 are put in close adhesion between flanges 9b and swagged ends 9c and are joined to each other. In this state, flange 9b of rivet 9 is housed inside step recess 5e, which is formed at the opening edge of each second through-hole 5d in locking block 5 and is disposed so as not to project beyond distal end face 5a of locking block 5.

As described above, locking blocks 5 and fastening body 6 are mechanically joined together by rivets 9. In a similar way to rivets 9, locking blocks 5 and fastening body 6 may be locally joined together by bolt fastening or another swagging technique.

As described above, a method of joining including surface joining through surface joint regions 16 with adhesive 17 and local joining through local joint regions 15 by welding or mechanical joining has an advantage of being able to ideally join locking blocks 5 and fastening body 6 together. In general, welding or mechanical joining techniques provide strong joining locally. However, an area and a number of parts joined by these techniques are restricted. For instance, an attempt to locally join parts over a wide area necessitates increasing joined locations or considering a welding or mechanical joining way such that the parts are joined over a wide area. This is disadvantageous because of increased time and effort needed for production and increased production costs. Thus, local joining is performed only in a partial, limited region. This creates a risk of concentrated shearing stress and a consequent rupture.

Bonding strength per unit area provided by adhesive joining tends to be lower than that provided by welding or mechanical joining. Nevertheless, adhesive joining provides increased bonding strength because parts are bonded together with an adhesive through the substantially whole region of the joint surface size, in other words, the substantially whole surface of the joint interface. In particular, adhesive joining allows the adhesive to be simply and readily applied to the substantially whole of the joint interface. Moreover, bonding strength provided by adhesive joining is low against peeling and cleavage but is high against pulling and shearing. In other words, adhesive joining can provide high bonding strength to resist a lateral slippage between each locking block 5 and fastening body 6. Fastening member 4 is required to have resistance to shearing stress on the joint interface between locking block 5 and fastening body 6. Surface joining by adhesive 17 provides high bonding strength to resist the lateral slippage between locking block 5 and fastening body 6 and hence assures excellent connection strength.

Since the locking block and the fastening body are joined together locally through a part of the joint surface size by welding or mechanical joining, a region other than local joint regions 15 is wide in the joint interface. Through surface joint region 16, which is the wide region, the locking block and the fastening body are joined together by surface with adhesive 17, and thus joining through a substantially whole surface of the joint interface is covered. Concurrently, the locking block and the fastening body are joined together through local joint regions 15 by welding or mechanical joining to provide bonding strength that is more excellent compared to surface joining only with adhesive 17. Joining by welding or mechanical joining does not require time needed for adhesive 17 to be cured and thus provides excellent bonding strength immediately after joining. As a result, even if adhesive 17, which is applied to a wide area by surface joining, has not been cured, locking block 5 and fastening body 6 are held in close adhesion and are joined together by local joining. This enables locking block 5 and fastening body 6 that are joined by surface to be joined together with improved firmness because adhesive 17 is reliably cured over a satisfactory length of time.

As described above, the technique of the present invention combines surface joining by adhesive with local joining by welding or mechanical joining and thereby exhibits a characteristic of being able to join a locking block to a fastening body with excellent connection strength. This is because the combination of the methods of joining makes full use of advantages held by the methods of joining while compensating for disadvantages of each other's methods of joining.

As illustrated in FIGS. 3 and 4, fastening members 4 described above are disposed at fixed positions, with locking blocks 5 guided into fitting parts 3a of end plates 3 and locked by stoppers 3b. Further, locking blocks 5 are fixed to end plates 3 by bolts 8 to connect the pair of end plates 3 by fastening member 4.

As described above, power supply device 100, in which a large number of secondary battery cells 1 are stacked, is configured to bind the plurality of secondary battery cells 1 by connecting end plates 3 disposed at both ends of battery stack 10, which includes the plurality of secondary battery cells 1, by fastening members 4. By binding the plurality of secondary battery cells 1 by end plates 3 and fastening members 4 that have high stiffness, the power supply device avoids a malfunction or other faults caused by swelling, deformation, a relative displacement, or a vibration of secondary battery cells 1 due to charging and discharging or degradation.

### (Insulating sheet 13)

Insulating sheet 13 is interposed between each fastening member 4 and battery stack 10. Insulating sheet 13 is made of a material, such as a resin, that has an insulating property and insulates metal-made fastening member 4 from secondary battery cells 1. Insulating sheet 13 illustrated in FIG. 2 and other figures includes flat board 13a to cover the side face of battery stack 10 and bent coverings 13b, 13c disposed on a top and a bottom of flat board 13a. Upper and lower bent coverings 13b, 13c are each bent from flat board 13a in an L shape so as to cover bent piece 4a of fastening member 4. Thus, a whole inner face of fastening member 4 is covered with insulative insulating sheet 13. This enables the fastening member to avoid unintended conduction of electricity between any secondary battery cell 1 and fastening member 4.

Power supply device 100 described above is assembled in steps shown below.
(1) A predetermined number of secondary battery cells 1 are stacked in the thickness of each of secondary battery cells 1 to constitute battery stack 10 such that every insulating spacer 11 is interposed between the secondary battery cells adjacent to each other.
(2) A pair of end plates 3 are disposed on both ends of battery stack 10 and the pair of end plates 3 on both sides are pressed with a press (not illustrated) to pressurize battery stack 10 at predetermined pressure through end plates 3 such that secondary battery cells 1 are kept compressed and pressurized.
(3) With battery stack 10 pressurized by end plates 3, fastening members 4 are connected to and fixed to the pair of end plates 3. Each fastening member 4 is disposed such that locking blocks 5 at both end portions are guided into fitting parts 3a of the pair of end plates 3. Fastening members 4 are fixed to end plates 3 with bolts 8 passing through locking blocks 5 being screwed into internal screw holes 3c in end plates 3. After the fastening members are fixed to the end plates, the pressurization is released. As a result, with tensile force applied to fastening members 4, locking blocks 5 are kept locked by stoppers 3b of end plates 3.
(4) On both lateral sides of battery stack 10, electrode terminals 2 facing each other of secondary battery cells 1 adjacent to each other are connected together via a bus bar (not illustrated). The bus bars are fixed to electrode terminals 2 to connect secondary battery cells 1 in series or in series and parallel. The bus bars are welded to electrode terminals 2 or are fixed to electrode terminals 2 with screws.

The power supply device described above can be used as an automotive power supply that supplies electric power to a motor used to drive an electrified vehicle. An electrified vehicle incorporating the power supply device may be an electrified vehicle such as a hybrid vehicle or a plug-in hybrid vehicle that is driven by an engine and a motor, or an electric vehicle that is driven only by a motor. The power supply device can be used as a power supply for any of these vehicles. Power supply device 100 having high capacity and high output to acquire electric power for driving the vehicle will be described below, for example. Power supply device 100 includes a large number of the above-described power supply devices connected in series or parallel, as well as a necessary controlling circuit.

### (Power supply device for hybrid vehicle)

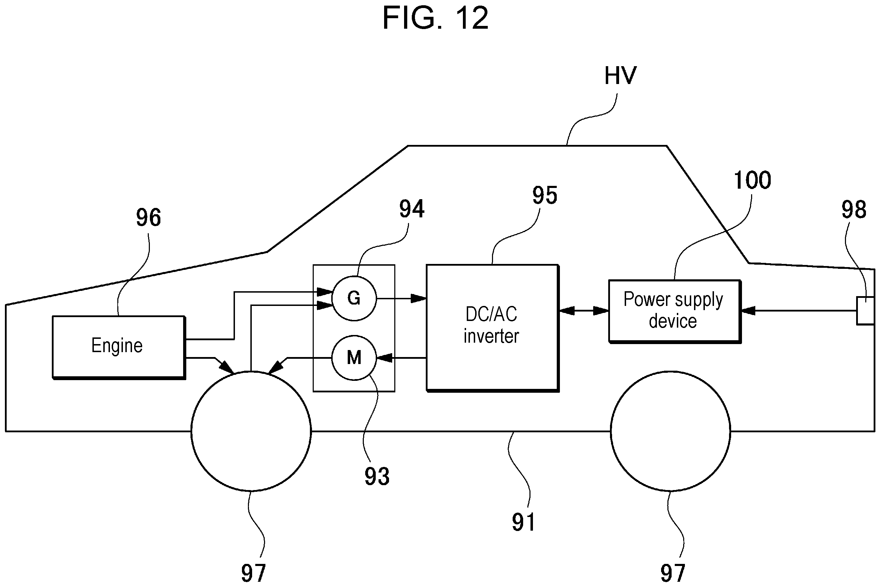

FIG. 12 illustrates an example of a power supply device incorporated in a hybrid vehicle that is driven by both an engine and a motor. Vehicle HV incorporating the power supply device illustrated in this figure includes vehicle body 91, engine 96 and traction motor 93 to let vehicle body 91 travel, wheels 97 that are driven by engine 96 and traction motor 93, power supply device 100 to supply motor 93 with electric power, and power generator 94 to charge batteries included in power supply device 100. Power supply device 100 is connected to motor 93 and power generator 94 via direct current (DC)/alternating current (AC) inverter 95. Vehicle HV travels by both of motor 93 and engine 96 while charging and discharging the batteries of power supply device 100. Motor 93 is driven when the engine efficiency is low, for example, during acceleration or low-speed travel, and makes the vehicle travel. Motor 93 runs on electric power supplied from power supply device 100. Power generator 94 is driven by engine 96 or driven through regenerative braking, a mechanism that slows the vehicle, to charge the batteries in power supply device 100. As illustrated in FIG. 12, vehicle HV may include charging plug 98 to charge power supply device 100. With charging plug 98 connected to an external power supply, power supply device 100 can be charged.

### (Power supply device for electric vehicle)

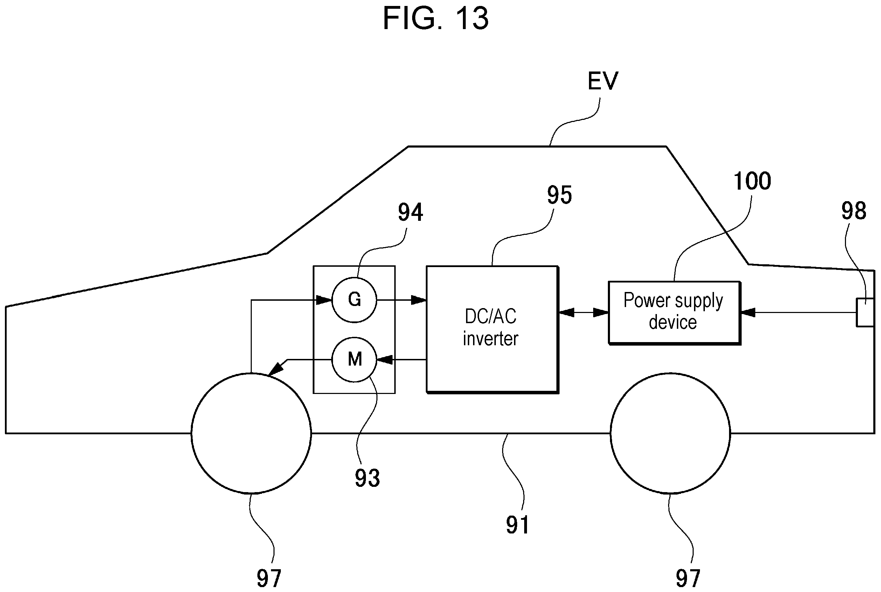

FIG. 13 illustrates an example of a power supply device incorporated in an electric vehicle that is driven only by a motor. Vehicle EV incorporating the power supply device illustrated in this figure includes vehicle body 91, traction motor 93 to let vehicle body 91 travel, wheels 97 that are driven by motor 93, power supply device 100 to supply motor 93 with electric power, and power generator 94 to charge batteries included in power supply device 100. Power supply device 100 is connected to motor 93 and power generator 94 via direct current (DC)/alternating current (AC) inverter 95. Motor 93 runs on electric power supplied from power supply device 100. Power generator 94 is driven by energy that is produced from regenerative braking applied to the EV and charges the batteries in power supply device 100. Vehicle EV includes charging plug 98. With charging plug 98 connected to an external power supply, power supply device 100 can be charged.

### (Power supply device for power storage device)

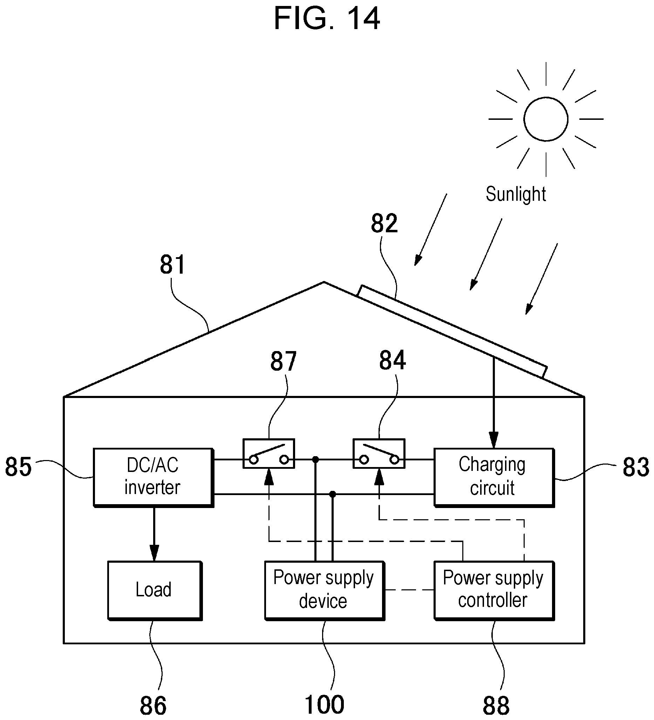

The present invention does not limit uses of the power supply device to power supplies for motors used to drive vehicles. The power supply device according to the exemplary embodiment can be used as a power supply for a power storage device that stores electricity by charging a battery with electric power generated by photovoltaic power generation, wind power generation, or other methods. FIG. 14 illustrates a power storage device that stores electricity by charging batteries in power supply device 100 by solar battery 82.

The power storage device illustrated in FIG. 14 charges the batteries in power supply device 100 with electric power generated by solar battery 82 that is disposed, for example, on a roof or a rooftop of building 81 such as a house or a factory. The power storage device charges the batteries in power supply device 100 through charging circuit 83, with solar battery 82 used as a power supply for recharging. After that, the power storage device supplies electric power to load 86 via DC/AC inverter 85. Thus, the power storage device has a charging mode and a discharging mode. In the power storage device illustrated in the figure, DC/AC inverter 85 and charging circuit 83 are connected to power supply device 100 via discharge switch 87 and charge switch 84, respectively. Power supply controller 88 of the power storage device switches On/Off of discharge switch 87 and charge switch 84. In the charging mode, power supply controller 88 turns on charge switch 84, turns off discharge switch 87, and permits power supply device 100 to be charged through charging circuit 83. When charging is completed and the batteries are fully charged or when a capacity of the batteries is charged at a predetermined level or higher, power supply controller 88 turns off charge switch 84 and turns on discharge switch 87 to switch to the discharging mode and permits power supply device 100 to discharge electricity into load 86. When needed, the power supply controller is allowed to turn on charge switch 84 and turn on discharge switch 87 to supply electricity to load 86 and charge power supply device 100 simultaneously.

Further, although no illustration is given, the power supply device can be used as a power supply for a power storage device that stores electricity by charging a battery using late-night power at nighttime. The power supply device charged by late-night power can be charged with late-night power, which is surplus power at power plants, and output electric power during the daytime, when the electric power load is high, to restrict peak power consumption at a low level in the daytime. The power supply device can also be used as a power supply that is charged with both output power of a solar battery and late-night power. By effectively using both electric power generated by the solar battery and late-night power, this power supply device can efficiently store electricity in consideration of the weather and power consumption.

The power supply device described above can be suitably used for the following applications: a backup power supply device mountable in a rack of a computer sever; a backup power supply device used for wireless base stations of cellular phones; a power supply for storage used at home or in a factory; a power storage device combined with a solar battery, such as a power supply for street lights; and a backup power supply for traffic lights or traffic displays for roads.

### INDUSTRIAL APPLICABILITY

A power supply device according to the present invention, an electrified vehicle and a power storage device each including such a power supply device, a fastening member for the power supply device, a method of manufacturing such a power supply device, and a method of manufacturing such a fastening member for the power supply device can be suitably used as a power supply for high currents, including a power supply for a motor used to drive an electrified vehicle such as a hybrid vehicle, a fuel cell vehicle, an electric vehicle, or an electric motorcycle. Examples of such a power supply include power supply devices for plug-in hybrid electric vehicles that can switch between the EV drive mode and the HEV drive mode, hybrid electric vehicles, electric vehicles, and the like. The power supply device can also be appropriately used for the following applications: a backup power supply device mountable in a rack of a computer sever; a backup power supply device used for wireless base stations of cellular phones; a power supply for storage used at home or in a factory; a power storage device combined with a solar battery, such as a power supply for street lights; and a backup power supply for traffic lights.

### REFERENCE MARKS IN THE DRAWINGS

- 100: power supply device
- 1: secondary battery cell
- 1X: terminal face
- 1a: exterior can
- 1b: sealing plate
- 2: electrode terminal
- 3: end plate
- 3a: fitting part
- 3x: bottom face
- 3y: support face
- 3b: stopper
- 3c: internal screw hole
- 4: fastening member
- 4a: bent piece
- 4c: through-hole
- 4d: through-hole
- 5: locking block
- 5a: distal end face
- 5b: locking face
- 5c: second through-hole
- 5d: second through-hole
- 5e: step recess
- 6: fastening body
- 6c: first through-hole
- 6d: first through-hole
- 8: bolt
- 8a: thread part
- 8b: head
- 9: rivet
- 9a: cylindrical part
- 9b: flange
- 9c: swagged end
- 10: battery stack
- 11: insulating spacer
- 12: end face spacer
- 13: insulating sheet
- 13a: flat board
- 13b, 13c: bent covering
- 14: gap
- 15: local joint region
- 16: surface joint region
- 17: adhesive
- 20: welding electrode
- 81: building
- 82: solar battery
- 83: charging circuit
- 84: charge switch
- 85: DC/AC inverter
- 86: load
- 87: discharge switch
- 88: power supply controller
- 91: vehicle body
- 93: motor
- 94: power generator
- 95: DC/AC inverter
- 96: engine
- 97: wheel
- 98: charging plug
- HV, EV: vehicle

## Claims

1. A power supply device comprising:
a battery stack including a plurality of secondary battery cells that are stacked, each of the secondary battery cells including an exterior can that is prismatic in shape;
a pair of end plates covering both end faces of the battery stack in a direction of stacking of the battery stack; and
a plurality of fastening members disposed at opposed side faces of the battery stack to fasten the end plates to each other,
wherein each of the plurality of the fastening members includes:
a fastening body in a shape of a flat sheet, the fastening body extending in the direction of stacking of the secondary battery cells; and
a locking block joined to an inner face of each of both ends in longer direction of the fastening body,
each of the end plates includes:
a fitting part in an outer peripheral surface of the each of the end plates to guide the locking block into the fitting part; and
a stopper close to the battery stack, the stopper abutting on the locking block, and
the fastening body and the locking block are fixed to each other through a joint interface between the fastening body and the locking block, the joint interface including:
a local joint region that is a part of a joint surface size through which the locking block and the fastening body are joined to each other; and
a surface joint region that is a whole of the joint surface size through which the locking block and the fastening body are joined to each other.

2. The power supply device according to claim 1, wherein the locking block and the fastening body are joined together with an adhesive through the surface joint region.

3. The power supply device according to claim 1 or 2, wherein the locking block and the fastening body are joined together by welding through the local joint region.

4. The power supply device according to claim 3, wherein the locking block and the fastening body are joined together by any of spot welding, laser welding, and metal inert gas welding through the local joint region.

5. The power supply device according to claim 1 or 2, wherein the locking block and the fastening body are joined together by mechanical joining through the local joint region.

6. The power supply device according to claim 5, wherein the locking block and the fastening body are joined together by any of rivets, swaging, and bolt fastening through the local joint region.

7. A power supply device comprising:
a battery stack including a plurality of secondary battery cells that are stacked, each of the secondary battery cells including an exterior can that is prismatic in shape;
a pair of end plates to cover both end faces of the battery stack in a direction of stacking of the battery stack; and
a plurality of fastening members disposed at opposed side faces of the battery stack to fasten the end plates to each other,
wherein each of the plurality of fastening members includes:
a fastening body in a shape of a flat sheet, the fastening body extending in the direction of stacking of the plurality of secondary battery cells; and
a locking block joined to an inner face of each of both ends in longer direction of the fastening body,
each of the end plates includes:
a fitting part in an outer peripheral surface of the each of the end plates to guide the locking block into the fitting part; and
a stopper close to the battery stack, the stopper abutting on the locking block, and
the fastening body and the locking block are fixed to each other through a joint interface between the fastening body and the locking block, the joint interface including:
a local joint region that is a part of a joint surface size through which the locking block and the fastening body are joined to each other by spot welding; and
a surface joint region that is a whole of the joint surface size through which the locking block and the fastening body are joined to each other with an adhesive.

8. The power supply device according to any one of claims 1 to 7, wherein a plurality of local joint regions each being the local joint region are disposed at a plurality of places in a direction of extension of the locking block.

9. The power supply device according to any one of claims 1 to 8, wherein
the each of the end plates includes an internal screw hole opened in a bottom face of the fitting part,
in each of the plurality of the fastening members, a through-hole is opened, the through-hole coinciding with the internal screw hole when the end plates are joined together, and
the locking block is fixed to the fitting part of the each of the end plates with a bolt being inserted through the through-hole and being screwed into the internal screw hole.

10. The power supply device according to claim 9, wherein
a plurality of through-holes each being the through hole are disposed on a first straight line in a direction of extension of the locking block, and
the local joint region is disposed on the first straight line and either between the through-holes or outside one of the plurality of the through-holes.

11. The power supply device according to claim 9, wherein
a plurality of the through-holes each being the through hole are disposed on a first straight line in a direction of extension of the locking block, and
the local joint region is disposed close to the battery stack relative to the first straight line.

12. The power supply device according to any one of claims 9 to 11, wherein
the through-hole includes:
a first through-hole opened in the fastening body; and
a second through-hole opened in the locking block, and
the first through-hole includes an internal diameter that a head of the bolt is allowed to pass through, and
the second through-hole includes an internal diameter that the head of the bolt is not allowed to pass through but a thread part of the bolt is allowed to pass through.

13. An electrified vehicle including the power supply device according to any one of claims 1 to 12, the electrified vehicle comprising:
the power supply device;
a motor for travelling that receives electric power from the power supply device;
a vehicle body that incorporates the power supply device and the motor; and
a wheel that is driven by the motor to let the vehicle body travel.

14. A power storage device including the power supply device according to any one of claims 1 to 12, the power storage device comprising:
the power supply device; and
a power supply controller to control charging and discharging of the power supply device, wherein the power supply controller enables charging of the plurality of secondary battery cells with electric power supplied from an outside and causes the plurality of secondary battery cells to charge.

15. A fastening member for a power supply device, the fastening member being configured to fasten a pair of end plates to each other, the end plates covering both end faces of a battery stack including a plurality of secondary battery cells that are stacked, each of the plurality of secondary battery cells including an exterior can that is prismatic in shape, the fastening member comprising:
a fastening body in a shape of a flat sheet, the fastening body extending in a direction of stacking of the plurality of secondary battery cells; and
a locking block joined to an inner face of each of both ends in longer direction of the fastening body, wherein the fastening body and the locking block are fixed to each other through a joint interface between the fastening body and the locking block, the joint interface including:
a local joint region that is a part of a joint surface size through which the locking block and the fastening body are joined to each other; and
a surface joint region that is a whole of the joint surface size through which the locking block and the fastening body are joined to each other.

16. A method of manufacturing a fastening member for a power supply device, the fastening member being configured to fasten a pair of end plates to each other, the end plates covering both end faces of a battery stack including a plurality of secondary battery cells that are stacked, each of the secondary battery cells including an exterior can that is prismatic in shape, the method comprising the steps of:
preparing a fastening body in a shape of a flat sheet, the fastening body extending in a direction of stacking of the plurality of secondary battery cells, and a locking block joined to an inner face of each of both ends in longer direction of the fastening body; and
joining the fastening body and the locking block to each other through a joint interface,
joining the locking block and the fastening body by surface together with an adhesive through a whole of a joint surface size during joining; and
locally joining the locking block and the fastening body together by welding or mechanical joining through a part of the joint surface size during joining.

17. A method of manufacturing a power supply device including:
a battery stack including a plurality of secondary battery cells that are stacked, each of the secondary battery cells including an exterior can that is prismatic in shape;
a pair of end plates to cover both end faces of the battery stack in a direction of stacking of the battery stack; and
a plurality of fastening members disposed at opposed side faces of the battery stack to fasten the end plates to each other, the method comprising the steps of:
preparing the plurality of fastening members each including:
a fastening body in a shape of a flat sheet, the fastening body extending in the direction of stacking of the plurality of secondary battery cells; and
a locking block joined to an inner face of each of both ends in longer direction of the fastening body;
preparing the end plates each including a fitting part formed in an outer peripheral surface of the end plate to guide the locking block into the fitting part and a stopper formed on the fitting part close to the battery stack, the stopper abutting on the locking block;
covering both end faces of the battery stack with the pair of the end plates; and
fastening the end plates to each other with the plurality of fastening members,
joining the locking block and the fastening body by surface together with an adhesive through a whole of a joint surface size included in a joint interface between the fastening body and the locking block during preparing each of the plurality of fastening members; and
locally joining the locking block and the fastening body together by welding or mechanical joining through a part of the joint surface size during preparing each of the plurality of fastening members.
